(19)

Europäisches
Patentamt
European
Patent Office
Office européen
des brevets

(11) **EP 2 891 852 A2**

(12) **EUROPEAN PATENT APPLICATION**

(43) Date of publication:
**08.07.2015 Bulletin 2015/28**

(51) Int Cl.:
***F25D 21/00*** (2006.01)    ***F25D 21/08*** (2006.01)

(21) Application number: **15150082.4**

(22) Date of filing: **05.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.01.2014 KR 20140001442**

(71) Applicant: **LG Electronics Inc.**
**Yeongdeungpo-gu**
**Seoul 150-721 (KR)**

(72) Inventors:
• **Lee, Kibae**
 **153-802 Seoul (KR)**
• **Eom, Yonghwan**
 **153-802 Seoul (KR)**
• **Choi, Sangbok**
 **153-802 Seoul (KR)**

(74) Representative: **Vossius & Partner**
**Patentanwälte Rechtsanwälte mbB**
**Siebertstrasse 3**
**81675 München (DE)**

(54) **Refrigerator and home appliance**

(57)    Disclosed are a refrigerator and a home appliance. The refrigerator includes a compressor, a capacitor configured to store direct current (DC) power, an inverter configured to convert the DC power into alternating current (AC) power and to output the AC power for driving of the compressor, a defrosting heater configured to be operated using the AC power from the inverter, a switching unit connected between the inverter and the defrosting heater to supply the AC power from the inverter to at least one of the defrosting heater or the compressor, and a compressor microcomputer configured to control the inverter. The refrigerator enables simplified driving of the defrosting heater using AC power output from the inverter.

EP 2 891 852 A2

**Description**

CROSS-REFERENCE TO RELATED APPLICATION

This application claims the priority benefit of Korean Patent Application No. 10-2014-0001442, filed on 6 January 2014 in the Korean Intellectual Property Office, the disclosure of which is incorporated herein by reference.

BACKGROUND OF THE INVENTION

1. Field of the invention

The present invention relates to refrigerators and home appliances and, more particularly, to refrigerators and home appliances which are capable of driving a defrosting heater in a simplified manner using alternating current (AC) power output from an inverter.

2. Description of the Related Art

Generally, refrigerators serve to keep food fresh for a long period. Such a refrigerator is comprised of a freezing compartment in which food is kept at a freezing temperature or lower, a refrigerating compartment in which food is kept at a temperature above the freezing temperature, and a refrigeration cycle for cooling of the freezing compartment and the refrigerating compartment. Operation of the refrigerator is controlled by a controller equipped in the refrigerator.

A kitchen space containing a refrigerator is not simply a space for dietary life, but is changed to a more important living space than ever before for conversation between family members as well as dietary life and other purposes. Therefore, there is a need to enlarge a refrigerator that is a core component of the kitchen space and to achieve quantitative and qualitative functional change for easy use by all family members.

SUMMARY OF THE INVENTION

Therefore, it is an object of the present invention to provide a refrigerator and a home appliance which are capable of driving a defrosting heater in a simplified manner using alternating current (AC) power output from an inverter.

It is another object of the present invention to provide a refrigerator and a home appliance which are capable of performing power consumption calculation in a simplified manner.

In accordance with one embodiment of the present invention, the above and other objects can be accomplished by the provision of a refrigerator including a compressor, a capacitor configured to store direct current (DC) power, an inverter configured to convert the DC power into alternating current (AC) power and to output the AC power for driving of the compressor, a defrosting heater configured to be operated using the AC power from the inverter, a switching unit connected between the inverter and the defrosting heater to supply the AC power from the inverter to at least one of the defrosting heater or the compressor, and a compressor microcomputer configured to control the inverter.

In accordance with another embodiment of the present invention, there is provided a home appliance including a motor, a capacitor configured to store DC power, an inverter configured to convert the DC power into AC power and to output the AC power for driving of the motor, a heater configured to be operated using the AC power from the inverter, a switching unit connected between the inverter and the heater to supply the AC power from the inverter to at least one of the heater or the motor, and a motor microcomputer configured to control the inverter.

BRIEF DESCRIPTION OF THE DRAWINGS

The above and other objects, features and advantages of the present invention will be more clearly understood from the following detailed description taken in conjunction with the accompanying drawings, in which:

FIG. 1 is a perspective view showing a refrigerator according to an embodiment of the present invention;
FIG. 2 is a perspective view showing an opened state of doors included in the refrigerator shown in FIG. 1;
FIG. 3 is a view showing an icemaker shown in FIG. 2;
FIG. 4 is a view schematically showing a configuration of the refrigerator shown in FIG. 1;
FIG. 5 is a block diagram schematically showing internal components of the refrigerator shown in FIG. 1;
FIG. 6 is a view showing an internal circuit of a refrigerator;
FIG. 7 is a view showing an internal circuit of the refrigerator shown in FIG. 1;
FIG. 8 is a circuit diagram showing a compressor driver shown in FIG. 7;
FIG. 9 is a timing chart showing one example of operation of a compressor and a defrosting heater;
FIG. 10 is a circuit diagram showing one example of a compressor microcomputer shown in FIG. 8;
FIG. 11 is a view showing various examples of a home appliance according to another embodiment of the present invention; and
FIG. 12 is a block diagram schematically showing an internal configuration of the home appliance shown in FIG. 11.

DETAILED DESCRIPTION OF THE PREFERRED EMBODIMENTS

Hereinafter, the present invention will be described in detail with reference to the accompanying drawings.

With respect to constituent elements used in the following description, suffixes "module" and "unit" are given or mingled with each other only in consideration of ease in the preparation of the specification, and do not have or serve as different meanings. Accordingly, the suffixes "module" and "unit" may be mingled with each other.

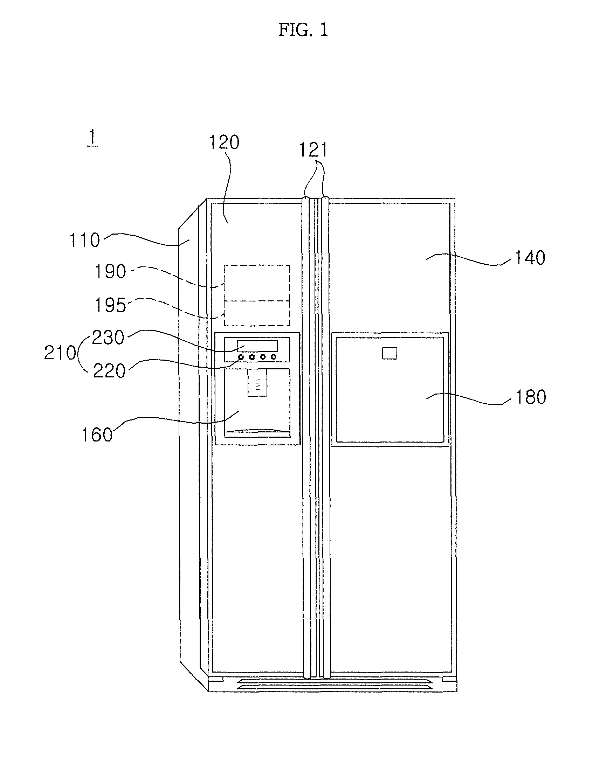

FIG. 1 is a perspective view showing a refrigerator according to an embodiment of the present invention.

In explaining with reference to the drawing, the refrigerator related to the present invention, designated by reference numeral 1, includes a case 110, which has an inner space divided into a freezing compartment and a refrigerating compartment (not shown in the drawing), a freezing compartment door 120 to shield the freezing compartment, and a refrigerating compartment door 140 to shield the refrigerating compartment, the case 110 and the doors 120 and 140 defining an outer appearance of the refrigerator 1.

The freezing compartment door 120 and the refrigerating compartment door 140 may be provided at front surfaces thereof with forwardly protruding door handles 121 respectively to assist a user in easily pivoting the freezing compartment door 120 and the refrigerating compartment door 140 by gripping the door handles 121.

The refrigerating compartment door 140 may further be provided at a front surface thereof with a so-called home bar 180 that allows the user to conveniently retrieve stored items, such as beverages, without opening the refrigerating compartment door 140.

The freezing compartment door 120 may further be provided at a front surface thereof with a dispenser 160 that allows the user to easily and conveniently retrieve ice or drinking water without opening the freezing compartment door 120. The freezing compartment door 120 may further be provided with a control panel 210 at the upper side of the dispenser 160. The control panel 210 serves to control driving operation of the refrigerator 1 and to display a screen showing a current operating state of the refrigerator 1.

While the dispenser 160 is shown in the drawing as being located at the front surface of the freezing compartment door 120, the present invention is not limited thereto and the dispenser 160 may be located at the front surface of the refrigerating compartment door 140.

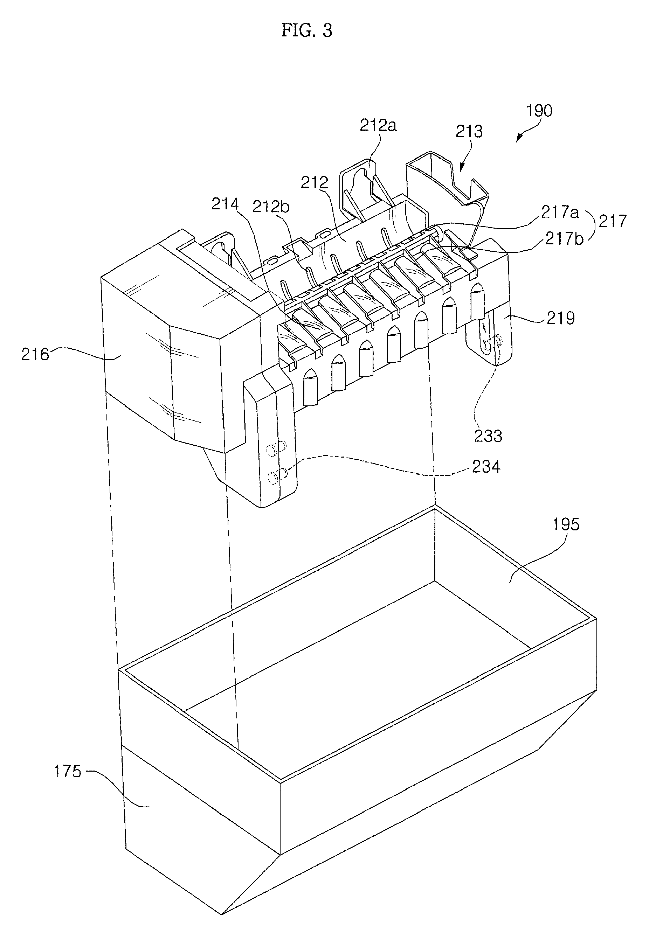

In addition, the freezing compartment (not shown) may accommodate, in an upper region thereof, an icemaker 190 used to make ice using water supplied thereto and cold air within the freezing compartment and an ice bank 195 located under the icemaker 190 to receive ice released from the icemaker 190. In addition, although not shown in the drawing, an ice chute may be used to guide the ice received in the ice bank 195 to fall into the dispenser 160. The icemaker 190 will be described below in more detail with reference to FIG. 3.

The control panel 210 may include an input unit 220 having a plurality of buttons and a display 230 to display control screens, operating states, and the like.

The display 230 displays control screens, operating states, and other information, such as an internal temperature of the refrigerator, etc. For example, the display 230 may display a service type of the dispenser 160 (ice cubes, water, crushed ice), a set temperature of the freezing compartment, and a set temperature of the refrigerating compartment.

The display 230 may be any one of liquid crystal display (LCD), light emitting diode (LED), and organic light emitting diode (OLED) units and the like. In addition, the display 230 may be a touchscreen that may additionally perform a function of the input unit 220.

The input unit 220 may include a plurality of operation buttons. For example, the input unit 220 may include a dispenser setting button (not shown) to set a service type of the dispenser (ice cubes, water, crushed ice), a freezing compartment temperature setting button (not shown) to set a temperature of the freezing compartment, and a refrigerating compartment temperature setting button (not shown) to set a temperature of the refrigerating compartment. In addition, the input unit 220 may be a touchscreen that may additionally perform a function of the display 230.

The refrigerator according to embodiments of the present invention is not limited to a double door type shown in the drawing, and may be any one of a one door type refrigerator, a sliding door type refrigerator, a curtain door type refrigerator and others. As will be described below, the refrigerator has no limit with regard to a shape thereof so long as the ice bank 195 and an ice bank vibrator 175 to vibrate the ice bank 195 are placed in the freezing compartment.

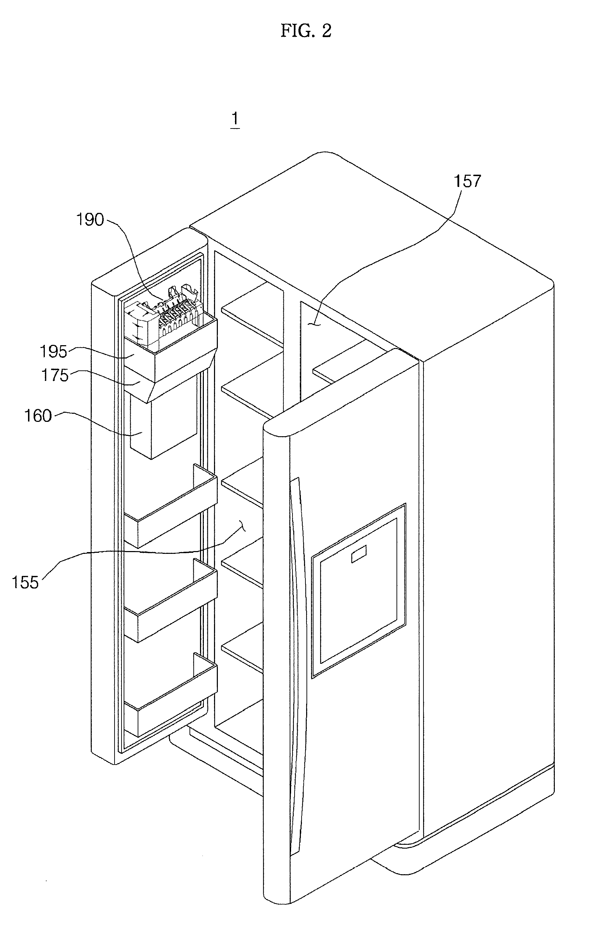

FIG. 2 is a perspective view showing an opened state of the doors included in the refrigerator shown in FIG. 1.

In explaining with reference to the drawing, a freezing compartment 155 is defined inside the freezing compartment door 120 and a refrigerating compartment 157 is defined inside the refrigerating compartment door 140.

Placed in an upper region of the freezing compartment 155 are the icemaker 190 that makes ice using water supplied thereto and cold air within the freezing compartment 155, the ice bank 195 that is located under the icemaker 190 to receive ice released from the icemaker 190, the ice bank vibrator 175 that vibrates the ice bank 195, and the dispenser 160. In addition, although not shown in the drawing, an ice chute may further be placed to guide the ice received in the ice bank 195 to fall into the dispenser 160.

FIG. 3 is a view showing the icemaker shown in FIG. 2.

In explaining with reference to the drawing, the icemaker 190 includes an ice making tray 212 in which water for making ice is received and made into a given shape of ice, a water feeder 213 to feed water into the ice making tray 212, a slider 214 along which the made ice slides down to the ice bank 190, and a heater (not shown) to separate the finished ice from the ice making tray 212.

The ice making tray 212 may be fastened to the freezing compartment 155 of the refrigerator via one or more fastening pieces 212a.

In addition, the icemaker 190 further includes an ice making driver 216 to operate an ejector 217. The ejector 217 is coupled to a motor (not shown) of the driver 216 via a shaft and serves to expel the ice, e.g., ice cubes, completely made in the ice making tray 212 into the ice bank 195.

The ice making tray 212 has an approximately semicylindrical shape and is provided at an inner surface thereof with divider protrusions 212b. The divider protrusions 212b are spaced apart from one another by a prescribed distance to separate and expel the ice cubes.

The ejector 217 includes a shaft 217a extending across the center of the ice making tray 212, and a plurality of ejector pins 217b protruding from one side of the shaft 217a of the ejector 217.

Here, the ejector pins 217a are respectively located between the respective neighboring divider protrusions 212b of the ice making tray 212.

The ejector pins 217a serve to expel the made ice into the ice bank 195. For example, the ice cubes moved by the ejector pins 217a are released onto the slider 214 and then fall into the ice bank 195 by sliding on the slider 214.

Although not shown in the drawing, the heater is attached to a lower surface of the ice making tray 212 and serves to increase a temperature of the ice making tray 212 when it is necessary to melt ice adhered to the inner surface of the ice making tray 212 for separation of the ice from the ice making tray 212. The separated ice is discharged into the ice bank 195 by the ejector 217.

The icemaker 190 may further include a light transmitter 233 and a light receiver 234, which serve to sense whether or not the ice bank 195 located under the ice making tray 212 is full of ice (hereinafter referred to as "ice full sensing") before separation of the ice from the ice making tray 212.

The light transmitter 233 and the light receiver 234 may be arranged at a lower end of the icemaker 190 and transmit or receive light to or from the ice bank 195 using infrared sensors, light emitting diodes (LEDs) or the like.

For example, in the case of an infrared sensor type, the infrared transmitter 233 and the infrared receiver 234 are respectively located at a lower end of the icemaker 190. The infrared receiver 234 will receive a high level signal when the ice bank 195 is not full of ice, and receive a low level signal when the ice bank 195 is full of ice. Thereby, a main microcomputer 310 judges whether or not the ice bank 195 is full of ice. Here, one or more infrared receivers 234 may be used, and the drawing shows two infrared receivers 234.

The light transmitter 233 and the light receiver 234 may be embedded in a lower case 219 of the icemaker 190 for protection of elements against moisture, frost, etc. due to ice.

The signal, received by the light receiver 234, is input to the main microcomputer 310. Upon ice full sensing, the main microcomputer 310 controls operation of the ice making driver 216 such that ice is no longer expelled into the ice bank 195.

The ice bank vibrator 175 to vibrate the ice bank 195 may be located at the underside of the ice bank 195. While the ice bank vibrator 175 is shown in the drawing as being located at the underside of the ice bank 195, the present invention is not limited thereto, and the ice bank vibrator 175 may be located at any position adjacent to the ice bank 195, such as a position at a side surface of the ice bank 195, so long as the ice bank vibrator 175 can vibrate the ice bank 195.

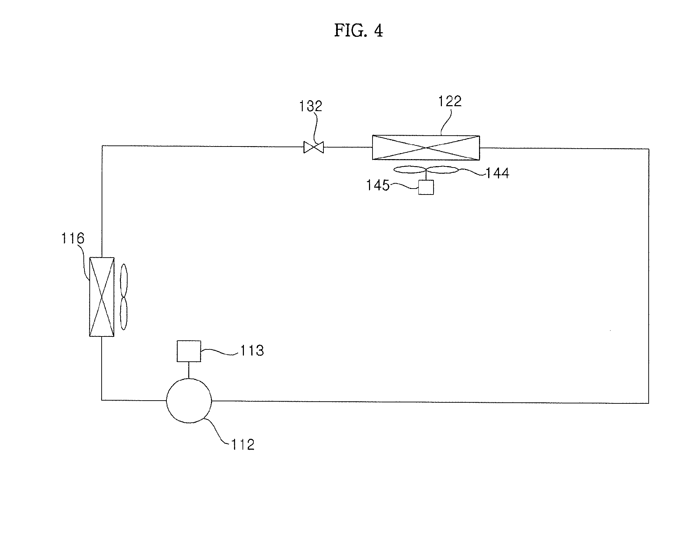

FIG. 4 is a view schematically showing a configuration of the refrigerator shown in FIG. 1.

In explaining with reference to the drawing, the refrigerator 1 may include a compressor 112, a condenser 116 to condense refrigerant compressed in the compressor 112, a freezing compartment evaporator 124 placed in the freezing compartment (not shown) to evaporate the condensed refrigerant directed from the condenser 116, and a freezing compartment expansion valve 134 to expand the refrigerant to be directed to the freezing compartment evaporator 124.

While the drawing shows use of a single evaporator by way of example, evaporators may be respectively placed in the freezing compartment and the refrigerating compartment.

That is, the refrigerator 1 may further include a refrigerating compartment evaporator (not shown) placed in the refrigerating compartment (not shown), a 3-way valve (not shown) to direct the condensed refrigerant from the condenser 116 to the refrigerating compartment evaporator (not shown) or the freezing compartment evaporator 124, and a refrigerating compartment expansion valve (not shown) to expand the refrigerant to be directed to the refrigerating compartment evaporator (not shown).

In addition, the refrigerator 1 may further include a gas-liquid separator (not shown) in which the refrigerant having passed through the freezing compartment evaporator 124 is divided into liquid and gas.

The refrigerator 1 may further include a refrigerating compartment fan (not shown) and a freezing compartment fan 144, which suction cold air having passed through the freezing compartment evaporator 124 and blow the cold air to the refrigerating compartment (not shown) and the freezing compartment (not shown) respectively.

The refrigerator 1 may further include a compressor driver 113 to drive the compressor 112, a refrigerating compartment fan driver (not shown) to drive the refrigerating compartment fan (not shown), and a freezing compartment fan driver 145 to drive the freezing compartment fan 144.

Meanwhile, in the case in which the common evaporator 124 is used in the freezing compartment and the refrigerating compartment as shown in the drawing, a damper (not shown) may be installed between the freezing compartment and the refrigerating compartment, and a fan (not shown) may forcibly blow cold air generated by the single evaporator to the freezing compartment and the refrigerating compartment.

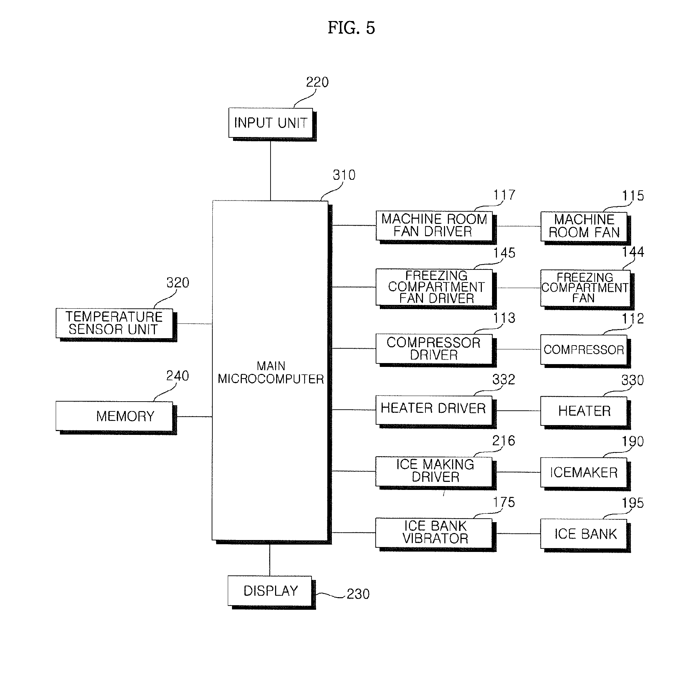

FIG. 5 is a block diagram schematically showing internal components of the refrigerator shown in FIG. 1.

In explaining with reference to the drawing, the refrigerator of FIG. 5 may include the compressor 112, a machine room fan 115, the freezing compartment fan 144, the main microcomputer 310, a heater 330, the icemaker 190, the ice bank 195, a temperature sensor unit 320, and a memory 240. In addition, the refrigerator may further include the compressor driver 113, a machine room fan driver 117, the freezing compartment fan driver 145, a heater driver 332, the ice making driver 216, the ice bank vibrator 175, the display 230, and the input unit 220.

A description related to the compressor 112, the machine room fan 115, and the freezing compartment fan 144 refer to FIG. 2.

The input unit 220 includes a plurality of operation buttons and transmits a signal related to an input freezing compartment set temperature or an input refrigerating compartment set temperature to the main microcomputer 310.

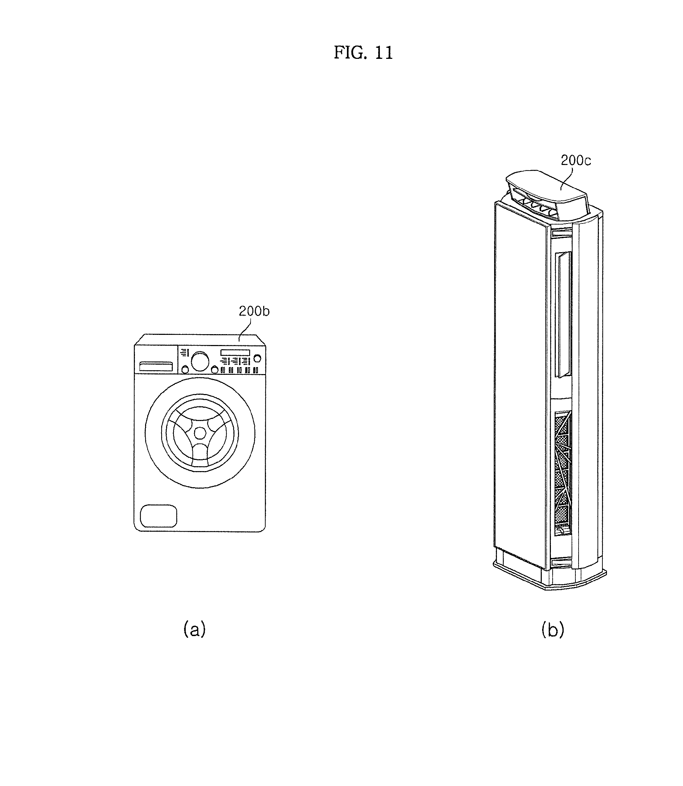

The display 230 may display an operating state of the refrigerator. In particular, in relation to an embodiment of the present invention, the display 230 may display final power consumption information, or accumulated power consumption information based on the final power consumption. The display 230 is operable under control of a display microcomputer (see 432 of FIG. 11(a)).

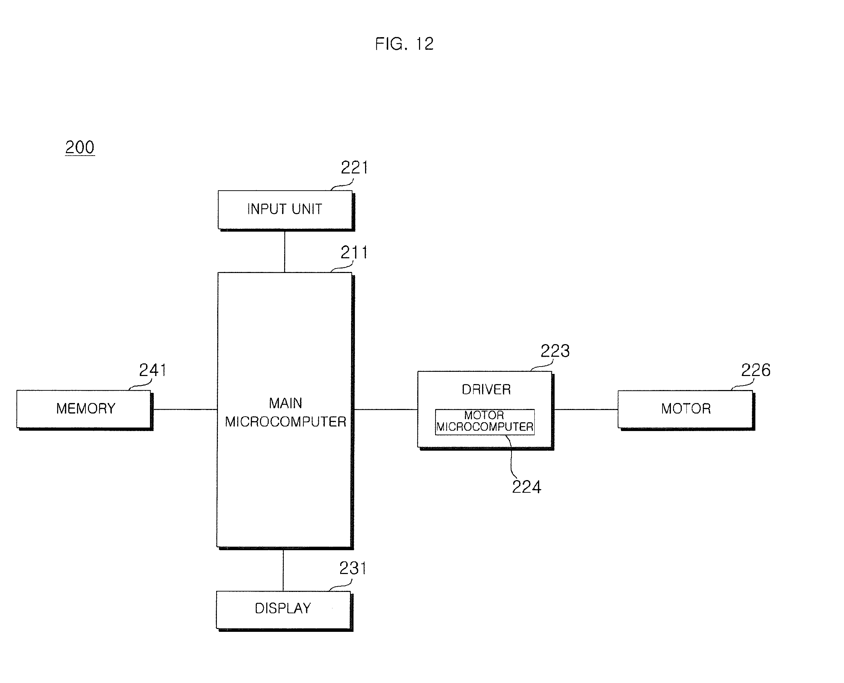

The memory 240 may store data required to operate the refrigerator. In particular, in relation to an embodiment of the present invention, as exemplarily shown in FIG. 12, the memory 240 may store power consumption information regarding each of a plurality of power consuming units. In addition, the memory 240 may output corresponding power consumption information to the main microcomputer 310 according to whether the respective power consuming units included in the refrigerator are operated or not.

In addition, the memory 240 may store information regarding distribution of elements of a plurality of power consuming units.

The temperature sensor unit 320 senses an internal temperature of the refrigerator and transmits a signal related to the sensed temperature to the main microcomputer 310. Here, the temperature sensor unit 320 may include sensors to sense a refrigerating compartment temperature and a freezing compartment temperature respectively. In addition, the temperature sensor 320 may sense a temperature of each chamber within the refrigerating compartment or a temperature of each chamber within the freezing compartment.

The main microcomputer 310 may control the compressor driver 113 and the fan driver 117 or 145 as exemplarily shown in the drawing to control turn-on/turn-off of the compressor 112 and the fan 115 or 144, thereby finally controlling the compressor 112 and the fan 115 or 144. Here, the fan driver may be the machine room fan driver 117 or the freezing compartment fan driver 145.

For example, the main microcomputer 310 may output a speed command signal corresponding to the compressor driver 113 or the fan driver 117 or 145.

The compressor driver 113 and the freezing compartment fan driver 145 as described above respectively include a compressor motor (not shown) and a freezing compartment fan motor (not shown), and these motors (not shown) may be operated respectively at target rotation speeds under control of the main microcomputer 310.

The machine room fan driver 117 may include a machine room fan motor (not shown), and the machine room fan motor (not shown) may be operated at a target rotation speed under control of the main microcomputer 310.

In the case in which the aforementioned motors are three phase motors, the motors may be controlled by switching operation in an inverter (not shown), or may be controlled to a constant speed using alternating current (AC) power. Here, the respective motors (not shown) may be any one of an induction motor, a blushless direct current (BLDC) motor, a synchronous reluctance (syn-RM) motor, and the like.

Meanwhile, the main microcomputer 310, as described above, may control general operations of the refrigerator 1, in addition to controlling operations of the compressor 112 and the fan 115 or 144.

For example, the main microcomputer 310 may control operation of the ice bank vibrator 175. In particular, upon ice full sensing, the main microcomputer 310 may control discharge of ice from the icemaker 190 to the ice bank 195 and also control vibration of the ice bank 195 during the discharge of ice or within a prescribed time after the discharge of ice. Vibration of the ice bank 195 during the discharge of ice may ensure even distribution of ice within the ice bank 195 without clustering of ice.

In addition, to prevent clustering of ice when the ice is kept in the ice bank 195 for a long time, the main microcomputer 310 may cause vibration of the ice bank 195 repeatedly at a prescribed time interval.

In addition, when the dispenser 160 is operated by user operation, the main microcomputer 310 may control discharge of ice from the ice bank 195 to the dispenser 160, and also control vibration of the ice bank 195 during the discharge of ice or immediately before the discharge of ice. More specifically, the main microcomputer 310 may control the ice bank vibrator 175 to vibrate the ice bank 195. In this way, it is possible to prevent clustering of ice to be discharged to the user via the dispenser 160.

The main microcomputer 310 may control operation of the heater (not shown) included in the icemaker 190 for separation of ice from the ice making tray 212.

Then, after the heater (not shown) is turned on, the main microcomputer 310 may control operation of the ejector 217 included in the icemaker 190 by controlling the ice making driver 216. This serves to control operation to smoothly discharge ice from the icemaker 190 into the ice bank 195.

Meanwhile, upon judgment that the ice bank 195 is full of ice, the main microcomputer 310 may control the heater (not shown) to be turned off. In addition, the main microcomputer 310 may control the ejector 217 included in the icemaker 190 to stop operation.

In addition, as described above, the main microcomputer 310 may control general operations of a refrigerant cycle to match a set temperature from the input unit 220. For example, the main microcomputer 310 may further control the 3-way valve 130, the refrigerating compartment expansion valve (not shown) and the freezing compartment expansion valve 134, in addition to controlling the compressor driver 113, the refrigerating compartment fan driver (not shown) and the freezing compartment fan driver 145. Then, the main microcomputer 310 may control operation of the condenser 116. In addition, the main microcomputer 310 may control operation of the display 230.

The heater 330 may be a freezing compartment defrosting heater. The freezing compartment defrosting heater 330 may be operated to remove frost from the freezing compartment evaporator 124. To this end, the heater driver 332 may control operation of the heater 330. Meanwhile, the main microcomputer 310 may control the heater driver 332.

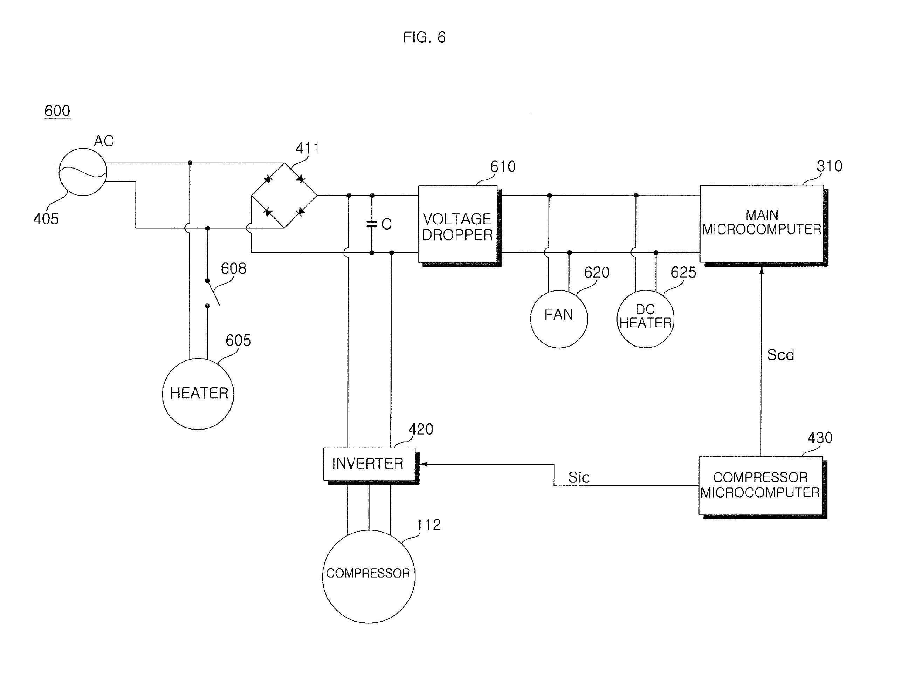

FIG. 6 is a view showing an internal circuit of a refrigerator.

The circuit 600 of FIG. 6 may include a rectifier 411, a capacitor C, a voltage dropper 610, a fan 620, a DC heater 625, the main microcomputer 310, a relay 608, a heater 605, an inverter 420, and a compressor microcomputer 430. In addition, the circuit 600 may further include an input current detector (not shown) to detect input current is input from a commercial AC power source 405, a DC terminal voltage detector (not shown) to detect voltage at each of two capacitor terminals, an output current detector (not shown) to detect inverter output current, and an output voltage detector (not shown) to detect inverter output voltage.

In the above-described circuit 600 of FIG. 6, to calculate refrigerator power consumption, compressor power consumption is first calculated using at least one of input current, DC terminal voltage, and output current detected in the compressor 112. Then, refrigerator power consumption may be calculated in consideration of the compressor power consumption.

The relay 608 is located between the commercial AC power source 405 and the rectifier 411 to drive the AC heater 605 equipped in the refrigerator 1. The AC heater 605 may be operated via turn-on operation of the relay 608.

When the refrigerator power consumption is calculated in the above-described manner, however, power consumption related to the heater 605 located upstream of the compressor 112 is not considered. In particular, in the case in which the heater 605 is a defrosting heater to remove frost attached to the freezing compartment evaporator 124, the above-described calculation manner causes a considerable calculation error of refrigerator power consumption. This is because most refrigerator power consumption is caused by the defrosting heater and the compressor.

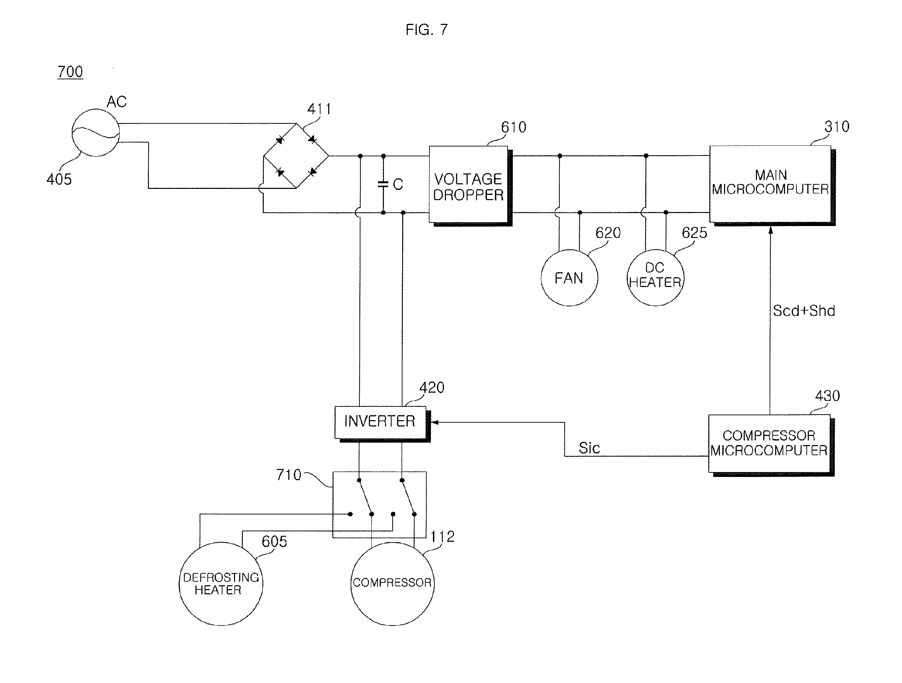

In an embodiment of the present invention, there is devised a method of accurately calculating refrigerator power consumption using detectors included in a compressor driver (e.g., the input current detector, the DC terminal voltage detector, the output current detector, the output voltage detector, etc.) without an additional device. This will be described below with reference to FIG. 7 as well as the following drawings.

FIG. 7 is a view showing an internal circuit of the refrigerator shown in FIG. 1.

First, referring to FIG. 7, the circuit 700 of FIG. 7 may include at least one circuit board installed in the refrigerator.

Specifically, the circuit 700 may include the rectifier 411, the capacitor C, the voltage dropper 610, the fan 620, the DC heater 625, the main microcomputer 310, a switching unit 710, the defrosting heater 605, the inverter 420, and the compressor microcomputer 430.

As compared with FIG. 6, the relay 608 is substituted with the switching unit 710, and the switching unit 710 and the defrosting heater 605 are located between the inverter 420 and the compressor 112 rather than being located near the input AC power source 405.

The rectifier 411 rectifies AC power from the commercial AC power source 405 and outputs the rectified power. While the drawing shows the rectifier 411 as having bridge diodes, various alterations are possible.

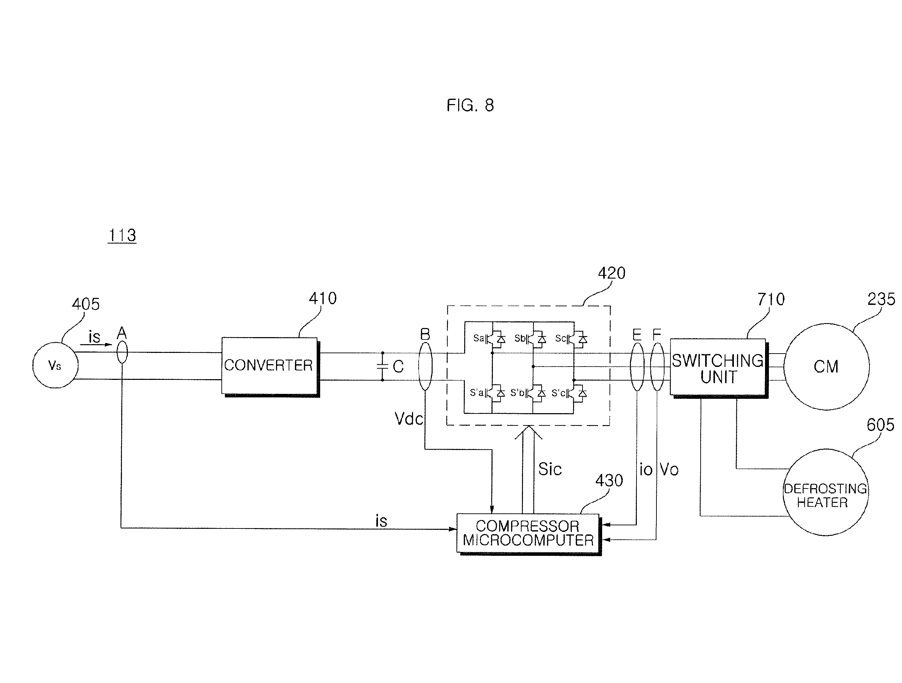

The rectifier 411 may be one example of a converter 410 of FIG. 8 because the rectifier 411 converts AC power into DC power.

Next, the capacitor C may be located at an output terminal of the rectifier 411 to store or smooth the rectified power. In this case, two terminals of the capacitor C may be named DC terminals. Thus, the capacitor C may be referred to as a DC terminal capacitor.

Voltage at the two terminals of the DC terminal capacitor C, i.e. DC terminal voltage $Vdc$ may be used to operate the main microcomputer 310 or to operate the compressor 112. The drawing shows that the DC terminal voltage $Vdc$ is used to operate both the main microcomputer 310 and the compressor 112.

The DC terminal voltage *Vdc* may be within a range of 200V to 300V and voltage drop is required to drive the main microcomputer 310 that is operated by scores of voltage.

The voltage dropper 610 may convert the input DC power to generate power for operation of respective units included in the circuit 700. Here, the operation power may be DC power. To this end, the voltage dropper 610 may include a switched mode power supply (SMPS) having switching elements.

The DC power dropped to approximately 15V may be input to the fan 620, the DC heater 625 and the main microcomputer 310. Then, the fan 620, the DC heater 625 and the main microcomputer 310 may be operated based on the dropped DC power.

The inverter 420 may drive the compressor 112. In particular, the inverter 420 may drive a compressor motor (see 230' of FIG. 8) included in the compressor 112.

To this end, the inverter 420 may include a plurality of inverter switching elements. The inverter 420 may convert the DC terminal voltage into three phase AC voltage having a prescribed frequency as the switching elements are turned on or off, thereby outputting the AC voltage to the compressor motor (see 230' of FIG. 8).

The defrosting heater 605 is an AC heater that may be operated using AC power from the inverter 420.

The switching unit 710 may be connected between the inverter 420 and the defrosting heater 605 and supply AC power from the inverter 420 to at least one of the defrosting heater 605 or the compressor 112.

The compressor microcomputer 430 may output a switching control signal *Sic* for driving of the compressor 112 to the inverter 420.

In addition, the compressor microcomputer 430 may control operation of the switching unit 710. In particular, the compressor microcomputer 430 may perform control to cause an operation duration of the defrosting heater 605 and an operation duration of the compressor 112 to be spaced apart from each other.

Meanwhile, the compressor microcomputer 430 may calculate power consumption of the entire refrigerator 1 based on at least one of input current is detected by an input current detector (see A of FIG. 8), DC terminal voltage *Vdc* detected by a DC terminal voltage detector (see B of FIG. 8), output current (see io of FIG. 8) detected by an output current detector (see E of FIG. 8), and output voltage (see vo of FIG. 8) detected by an output voltage detector (see F of FIG. 8).

As the circuit is configured in such a manner that the defrosting heater 605 and the compressor 112, which are the maximum power consuming units of the refrigerator, are located downstream of the switching unit 710, refrigerator power consumption may be calculated based on current, voltage and the like acquired by the respective detectors included in the compressor driver 113. In this way, simplified and accurate calculation of the refrigerator power consumption may be accomplished.

The refrigerator power consumption *Scd + Shd,* calculated by the compressor microcomputer 430, may be transmitted to the main microcomputer 310. The main microcomputer 310 may control the display 230 to display the received refrigerator power consumption.

In the drawing, *Scd* may denote compressor power consumption for a compressor operation duration, and *Shd* may denote defrosting heater power consumption for a defrosting heater operation duration. The output refrigerator power consumption may be represented by *Scd + Shd* upon simultaneous operation of the defrosting heater and the compressor, whereas the output refrigerator power consumption may be represented by *Scd* or *Shd* upon separate operation of the defrosting heater and the compressor.

The power consumption calculation by the compressor microcomputer 430 will be described below with reference to FIG. 8.

FIG. 8 is a circuit diagram showing a compressor driver shown in FIG. 7.

Referring to the drawing, the compressor driver 113 according to an embodiment of the present invention may include the converter 410, the inverter 420, the compressor microcomputer 430, the DC terminal voltage detector B, the smoothing capacitor C, the output current detector E and the output voltage detector F.

The converter 410 converts AC power from the commercial AC power source 405 into DC power and outputs the DC power. While the drawing shows the commercial AC power source 405 as a single phase AC power source, the commercial AC power source 405 may be a three phase AC power source. An inner structure of the converter 410 is variable according to the kind of the commercial AC power source 405.

Meanwhile, the converter 410 may include diodes and the like without switching elements, and perform rectification operation without separate switching operation.

For example, the converter 410 may include four bridge diodes when a single phase AC power source is used, and may include six bridge diodes when a three phase AC power source is used.

Alternatively, the converter 410 may be a half bridge type converter including a combination of two switching elements and four diodes. In particular, when a three phase AC power source is used, the converter 410 may include six switching elements and six diodes.

In the case of including switching elements, the converter 410 may perform voltage boosting, power factor improvement, and DC power conversion via switching operation of the corresponding switching elements.

The capacitor C serves to smooth and store input power. The capacitor C of FIG. 8 may be identical to the capacitor C of FIG. 7.

The DC terminal voltage detector B may detect DC terminal voltage *Vdc* at two terminals of the smoothing capacitor C. To this end, the DC terminal voltage detector B may include a resistor, an amplifier and the like. The detected DC terminal voltage *Vdc* may be a discrete pulse signal input to the compressor microcomputer 430.

The inverter 420 may include a plurality of inverter switching elements, and convert DC power *Vdc*, smoothed as the switching elements are turned on or off, into three phase AC power va, vb and vc having a prescribed frequency and output the same to a three phase synchronous motor 235.

The inverter 420 includes upper arm switching elements Sa, Sb and Sc and lower arm switching elements S'a, S'b and S'c, which are respectively connected to each other in series. As such, a total of three pairs of upper arm and lower arm switching elements Sa &S'a, Sb&S'b and Sc& S'c are acquired. Anti-parallel diodes are connected to the respective switching elements Sa, S'a, Sb, S'b, Sc and S'c.

The switching elements included in the inverter 420 are turned on or off based on the inverter switching control signal *Sic* from the compressor microcomputer 430. Thereby, the inverter 420 outputs three phase AC power having a prescribed frequency to the three phase synchronous motor 235.

The compressor microcomputer 430 may control switching operation of the inverter 420. To this end, the compressor microcomputer 430 may receive output current io detected by the output current detector E.

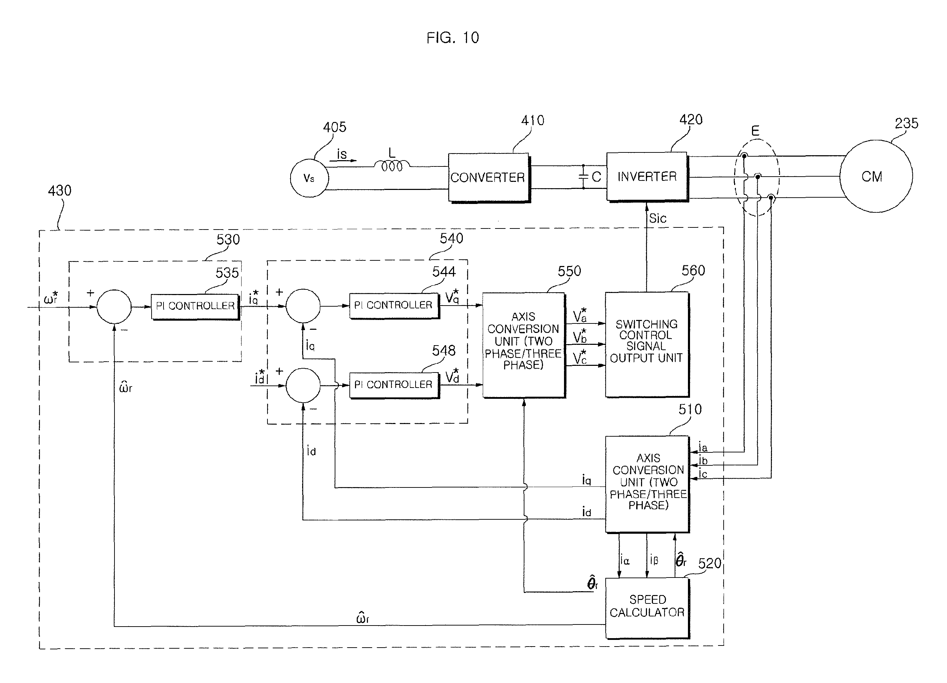

The compressor microcomputer 430 outputs the inverter switching control signal *Sic* to the inverter 420, in order to control switching operation of the inverter 420. The inverter switching control signal *Sic* is a pulse width modulation (PWM) type switching control signal and is generated and output based on the output current io detected by the output current detector E. A detailed operation related to the output of the inverter switching control signal *Sic* by the compressor microcomputer 430 will be described below with reference to FIG. 10.

The output current detector E detects the output current io flowing between the inverter 420 and the three phase motor 235. That is, the output current detector E detects current flowing to the motor 235. The output current detector E may detect all of three phase current *ia, ib* and *ic,* or may detect two phase output current using three phase balance.

The output current detector E may be located between the inverter 420 and the switching unit 710, and may use a current transformer (CT), a shunt resistor, or the like for current detection.

In the case of using a shunt resistor, three shunt resistors may be located between the inverter 420 and the switching unit 710, or may be respectively connected at one end thereof to the three lower arm switching elements S'a, S'b and S'c of the inverter 420. Alternatively, two shunt resistors may be used based on three phase balance. Alternatively, a single shunt resistor may be located between the above-described capacitor C and the inverter 420.

The detected output current io may be a discrete pulse signal applied to the compressor microcomputer 430. The inverter switching control signal *Sic* is generated based on the detected output current io. The following description is under the assumption that the detected output current io is three phase output current *ia, ib* and *ic.*

The output voltage detector F is located between the inverter 420 and the switching unit 710 and serves to detect phase voltage, i.e. output voltage vo directed from the inverter 420 to the three phase motor 235. To this end, the DC terminal voltage detector B may include a resistor, an amplifier or the like. The detected output voltage *vo* may be a discrete pulse signal input to the compressor microcomputer 430.

The compressor motor 235 may be a three phase motor. The compressor motor 235 includes a stator and a rotator, and the rotator is rotated as AC power of each phase having a prescribed frequency is applied to a coil of the stator of each phase.

Examples of the motor 235 may include a surface mounted permanent magnet synchronous motor (SMPMSM), an interior permanent magnet synchronous motor (IPMSM), and a synchronous reluctance motor (SynRM). Among these motors, the SMPMSM and the IPMSM are characterized by presence of a permanent magnet, and the SynRM is characterized by absence of a permanent magnet.

Meanwhile, the compressor microcomputer 430 may perform calculation of refrigerator power consumption.

In one example, the compressor microcomputer 430 may calculate refrigerator power consumption based on the output current io detected by the output current detector E that is located between the inverter 420 and the switching unit 710. As described above with reference to FIG. 7, due to the fact that the defrosting heater 605 and the compressor 112 are located downstream of the switching unit 710, calculation of refrigerator power consumption including defrosting heater power consumption and compressor power consumption may be performed based on the output current io detected by the output current detector E.

While the power consumption calculation requires voltage as well as current, estimation of output voltage based on the detected output current io is possible and, thus, power consumption may be calculated using the estimated voltage.

In another example, the compressor microcomputer 430 may calculate refrigerator power consumption based on the output current io detected by the output current detector E and the output voltage *vo* detected by the output voltage detector F, both the output current detector E and the output voltage detector F being located between the inverter 420 and the switching unit 710. As described above with reference to FIG. 7, due to the fact that the defrosting heater 605 and the compressor 112 are located downstream of the switching unit 710, refrigerator power consumption including defrosting heater power consumption and compressor power consumption may be calculated in a simplified manner based on the output current io detected by the output current detector E and the output voltage *vo* detected by the output voltage detector F.

In a further example, the compressor microcomputer 430 may calculate refrigerator power consumption based on the input current *is* detected by the input current detector A and the DC terminal voltage *Vdc* detected by the DC terminal voltage detector B.

This power consumption calculation may be performed based on the following Equation 1.

## Equation 1

$$P = V_{dc} \, X \, I_{SRMS} \, X \, pf$$

Here, *P* is refrigerator power consumption, *Vdc* is detected DC terminal voltage, $I_{SRMS}$ is a virtual value of input current, and *pf* is a power factor.

In this case, the power factor may vary according to whether the compressor 112 is operated or not and whether the AC heater 605 for defrosting operation is operated or not.

For example, *pf* may be set to *pf1* when the compressor 112 is operated to supply cold air into a freezing compartment, and may be set to *pf2* when the compressor 112 is operated to supply cold air into a refrigerating compartment. Pf may be set to *pf3* when the AC heater 605 for defrosting operation is operated without operation of the compressor 112.

In this case, a relational expression of *pf1<pf2<pf3* may be established. That is, *pf3* with regard to operation of the AC heater 605 for defrosting operation may have the greatest value.

These power factor values may be stored in a table, and the resulting power factor table may be stored in the memory 240 of the refrigerator, or may be stored in the compressor microcomputer 430.

Then, the compressor microcomputer 430 may transmit the refrigerator power consumption calculated in the various manners to the main microcomputer 310 as described above.

Next, the main microcomputer 310 may output the power consumption, calculated by the compressor microcomputer 430, as final power consumption. As such, the display 230 may display the final power consumption.

In this case, the display 230 may display refrigerator power consumption for a first period (e.g., one day), or may display refrigerator power consumption for a second period (e.g., one month).

Alternatively, the display 230 may display whether refrigerator power consumption increases or decreases via comparison of power consumption for different periods. Alternatively, the display 230 may display whether power consumption costs with respect to refrigerator power consumption increases or decreases.

In addition, the display 230 may display information regarding refrigerator power consumption at a given cycle, or may display information regarding refrigerator power consumption for a given time (e.g., 15 minutes). This assists the user in intuitively recognizing refrigerator power consumption.

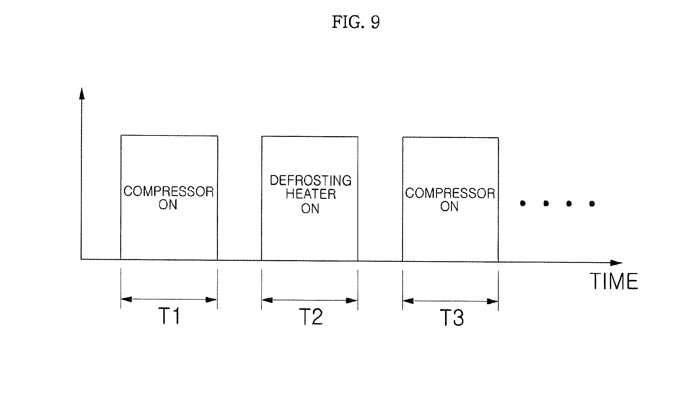

FIG. 9 is a timing chart showing one example of operation of the compressor and the defrosting heater.

Referring to the drawing, a first duration T1 may be a duration for which the compressor 112 is operated, a second duration T2 may be a duration for which the defrosting heater 605 is operated, and a third duration T3 may be a duration for which the compressor 112 is operated. For this operation, the switching unit 710 may supply AC power output from the inverter 420 to the compressor 112 for the first duration T1 and for the third duration T3, and to the defrosting heater 605 for the second duration T2.

While FIG. 9 shows that the operation duration of the defrosting heater 605 is spaced apart from the operation duration of the compressor 112, alternatively, these operation durations may partially overlap each other.

FIG. 10 is a circuit diagram showing one example of the compressor microcomputer shown in FIG. 8.

Referring to FIG. 10, the compressor microcomputer 430 may include an axis conversion unit 510, a speed calculator 520, a current command generator 530, a voltage command generator 540, an axis conversion unit 550, and a switching control signal output unit 560.

The axis conversion unit 510 receives three phase output current *ia, ib* and *ic* detected by the output current detector E and transforms the same into two phase current *iα* and *iβ* of a stationary coordinate system.

The axis conversion unit 510 may also perform transformation from the two phase current *iα* and *iβ* of the stationary coordinate system into two phase current *id* and *iq* of a rotational coordinate system.

The speed calculator 520 may output a position $\hat{\theta}_r$ and a speed $\hat{\omega}_r$, which are calculated based on the two phase current *iα* and *iβ* of the stationary coordinate system axis-transformed by the axis conversion unit 510.

The current command generator 530 generates current command $i^*_q$ based on the calculated speed $\hat{\omega}_r$, and a speed command $\omega^*_r$. For example, the current command generator 530 may perform PI control in a PI controller 535 based on a difference between the calculated speed $\hat{\omega}_r$ and the speed command $\omega^*_r$, and generate the current command $i^*_q$. While the drawing shows a q-axis current command $i^*_q$ as a current command, alternatively, a d-axis current command $i^*_d$ may be concurrently generated. The d-axis current command $i^*_d$ may be set to zero.

The current command generator 530 may further include a limiter (not shown) to limit a level of the current command $i^*_q$ so as to prevent the current command $i^*_q$ from deviating from an allowable range.

Subsequently, the voltage command generator 540 generates d-axis and q-axis voltage commands $v^*_d$ and $v^*_q$ based on the d-axis and q-axis current $id$ and $iq$ of the two phase rotational coordinate system axis-transformed by the axis conversion unit and the current commands $i^*_d$ and $i^*_q$ from the current command generator 530. For example, the voltage command generator 540 may perform PI control in a PI controller 544 based on a difference between the q-axis current $iq$ and the q-axis current command $i^*_q$, and generate the q-axis voltage command $v^*_q$. In addition, the voltage command generator 540 may perform PI control in a PI controller 548 based on a difference between the d-axis current $i_d$ and the d-axis current command $i^*_d$, and generate the d-axis voltage command $v^*_d$. The voltage command generator 540 may further include a limiter (not shown) to limit a level of the d-axis and q-axis voltage commands $v^*_d$ and $v^*_q$ so as to prevent the voltage commands $v^*_d$ and $v^*_q$ from deviating from an allowable range.

The generated d-axis and q-axis voltage commands $v^*_d$ and $v^*_q$ are input to the axis conversion unit 550.

The axis conversion unit 550 performs axis transformation upon receiving the calculated position $\hat{\theta}_r$ from the speed calculator 520 and the d-axis and q-axis voltage commands $v^*_d$ and $v^*_q$.

First, the axis conversion unit 550 performs transformation from a two phase rotational coordinate system into a two phase stationary coordinate system. In this case, the position $\hat{\theta}_r$ calculated by the speed calculator 520 may be used.

Then, the axis conversion unit 550 performs transformation from the two phase stationary coordinate system into a three phase stationary coordinate system. Through this transformation, the axis conversion unit 550 outputs three phase output voltage commands $v^*_a$, $v^*_b$ and $v^*_c$.

The switching control signal output unit 560 generates and outputs an inverter switching control signal *Sic* based on pulse width modulation using the three phase output voltage commands $v^*_a$, $v^*_b$ and $v^*_c$.

The output inverter switching control signal *Sic* may be converted into a gate drive signal by a gate driver (not shown) and input to a gate of each switching element included in the inverter 420. In this way, switching operation of the respective switching elements Sa, S'a, Sb, S'b, Sc and S'c included in the inverter 420 occurs.

FIG. 11 is a view showing various examples of a home appliance according to another embodiment of the present invention, and FIG. 12 is a block diagram schematically showing an internal configuration of the home appliance shown in FIG. 11.

The home appliance according to the embodiment of the present invention may include a motor microcomputer that calculates power consumption of the home appliance based on, e.g., current or voltage detected by a detector included in a motor driver.

The home appliance may include a washing machine 200b of FIG. 11(a) or an air conditioner 200c of FIG. 11(b), in addition to the refrigerator 1 of FIG. 1.

The home appliance 200 of FIG. 12 may include an input unit 221 for user input, a display 231 to display an operating state and the like of the home appliance, a driver 223 to drive the home appliance 200, a memory 241 to store product information, operation information and the like of the home appliance 200, and a main microcomputer 221 to control general operations of the home appliance 200.

In one example, when the home appliance is the washing machine 200b, the driver 223 may include a motor microcomputer 224 to drive a motor 226 that supplies torque to a drum or a tub. The washing machine 200b may include a heater that is operated by AC power.

In another example, when the home appliance is the air conditioner 200c, the driver 223 may include the motor microcomputer 224 to drive a compressor motor for an outdoor unit. The air conditioner 200c may include a heater that is operated by AC power.

The home appliance 200, such as the washing machine 200b or the air conditioner 200c, may include a motor driver similar to the compressor driver of the refrigerator as described above with reference to FIGs. 7 to 9, and may further include a switching unit that is located downstream of the inverter 420 to supply AC power to the heater and the motor.

The home appliance 200 may supply AC power to at least one of the heater or the motor via switching operation of the switching unit.

In this case, the motor microcomputer 224 may calculate power consumption of the home appliance 200 while controlling the switching unit.

That is, similar to FIG. 8, the motor microcomputer 224 may calculate power consumption of the home appliance 200 based on output current io detected by the output current detector E that is located between the inverter 420 and the switching unit 710.

While the power consumption calculation requires voltage as well as current, estimation of output voltage based on the detected output current io is possible, and power consumption may be calculated using the estimated voltage.

In another example, the motor microcomputer 224 may calculate power consumption of the home appliance 200 based on the output current io detected by the output current detector E and the output voltage vo detected by the output voltage detector F, both the output current detector E and the output voltage detector F being located between the inverter 420 and the switching unit 710.

In a further example, the motor microcomputer 224 may calculate power consumption of the home appliance 200 based on the input current *is* detected by the input current detector A and the DC terminal voltage *Vdc* detected by the DC terminal voltage detector B.

Then, the motor microcomputer 224 may transmit the calculated power consumption of the home appliance 200 to the main microcomputer 211.

As is apparent from the above description, according to an embodiment of the present invention, a switching unit may be provided between an inverter and a compressor included in a refrigerator and serve to selectively supply AC power to the compressor or a defrosting heater. This enables simplified driving of the defrosting heater using AC power output from the inverter.

Meanwhile, a compressor microcomputer may be provided to calculate power consumption of the refrigerator in a simplified manner based on current and voltage detected by detectors included in a compressor driver while controlling the inverter.

A refrigerator and a home appliance according to the present invention should not be limited to configurations and methods of the above-described embodiments, and all or some of the embodiments may be selectively combined with one another to achieve various alterations.

In addition, a method of operating a refrigerator according to the present invention may be implemented as code that may be written on a processor readable recording medium and thus read by a processor provided in the refrigerator. The processor readable recording medium may be any type of recording device in which data is stored in a processor readable manner. Examples of the processor readable recording medium may include a ROM, a RAM, a CD-ROM, a magnetic tape, a floppy disc, and an optical data storage device. In addition, the processor readable recording medium includes a carrier wave (e.g., data transmission over the Internet). Also, the processor readable recording medium may be distributed over a plurality of computer systems connected to a network so that processor readable code is written thereto and executed therefrom in a decentralized manner.

Although the preferred embodiments of the present invention have been disclosed for illustrative purposes, those skilled in the art will appreciate that various modifications, additions and substitutions are possible without departing from the scope and spirit of the invention as disclosed in the accompanying claims.

**Claims**

1. A refrigerator comprising:

    a compressor (112);
    a capacitor (C) configured to store direct current (DC) power;
    an inverter (420) configured to convert the DC power into alternating current (AC) power and to output the AC power for driving the compressor;
    a defrosting heater (605) configured to be operated using the AC power from the inverter;
    a switching unit (710) connected between the inverter and the defrosting heater to supply the AC power from the inverter to at least one of the defrosting heater or the compressor; and
a compressor microcomputer (430) configured to control the inverter.

2. The refrigerator according to claim 1, wherein the compressor microcomputer (430) is configured to control operation of the switching unit.

3. The refrigerator according to claim 1 or 2, wherein an operation period of the defrosting heater and an operation period of the compressor have an interval therebetween.

4. The refrigerator according to any of preceding claims, further comprising an output current detector (E) configured to detect output current from the inverter,
   wherein the compressor microcomputer (430) is configured to calculate refrigerator power consumption based on the output current.

5. The refrigerator according to claim 4, further comprising an output voltage detector (F) configured to detect output voltage from the inverter,
   wherein the compressor microcomputer (430) is configured to calculate refrigerator power consumption based on the output current and the output voltage.

6. The refrigerator according to any of claims 1 to 3, further comprising:

    an input current detector (A) configured to detect input current of AC power input to the refrigerator;
    a converter (410) configured to convert the input AC power into DC power, providing it to the capacitor (C); and
    a DC terminal voltage detector (B) configured to detect voltage at two terminals of the capacitor, wherein the compressor microcomputer (430) is configured to calculate refrigerator power consumption based on the detected input current and the detected DC terminal voltage.

7. The refrigerator according to claim 6, wherein the compressor microcomputer (430) is configured to calculate the refrigerator power consumption based on the detected input current, the detected DC terminal voltage, and a power factor value.

8. The refrigerator according to claim 7, wherein the compressor microcomputer (430) is configured to set the power factor value greater when the compressor is operated to feed cold air into a refrigerating compartment than when the compressor is operated to feed cold air into a freezing compartment, and to calculate the refrigerator power consumption based on the power factor value so set.

9. The refrigerator according to any one of claims 4 to 8, further comprising:

a display (230); and
a main microcomputer (310) configured to control the display,
wherein the compressor microcomputer (430) is configured to transmit the calculated refrigerator power consumption to the main microcomputer, and
wherein the main microcomputer is configured to control the display to display the received refrigerator power consumption.

10. A home appliance comprising:

a motor (226);
a capacitor (C) configured to store DC power;
an inverter (420) configured to convert the DC power into AC power and to output the AC power for driving the motor;
a heater (605) configured to be operated using the AC power from the inverter;
a switching unit (710) connected between the inverter and the heater to supply the AC power from the inverter to at least one of the heater or the motor; and
a motor microcomputer (224) configured to control the inverter.

11. The home appliance according to claim 10, further comprising an output current detector (E) configured to detect output current from the inverter, wherein the motor microcomputer (224) is configured to calculate home appliance power consumption based on the output current.

12. The home appliance according to claim 11, further comprising an output voltage detector (F) configured to detect output voltage from the inverter, wherein the motor microcomputer (224) is configured to calculate home appliance power consumption based on the output current and the output voltage.

13. The home appliance according to claim 10, further comprising:

an input current detector (A) configured to detect input current of AC power input to the home appliance;
a converter (410) configured to convert the input AC power into DC power, providing it to the capacitor (c); and
a DC terminal voltage detector (B) configured to detect voltage at two terminals of the capacitor, wherein the motor microcomputer (224) is configured to calculate home appliance power consumption based on the detected input current and the detected DC terminal voltage.

14. The home appliance according to claim 13, wherein the motor microcomputer (224) is configured to calculate the home appliance power consumption based on the detected input current, the detected DC terminal voltage, and a power factor value.

15. The home appliance according to any one of claims 11 to 14, further comprising:

a display (231); and
a main microcomputer (211) configured to control the display,
wherein the motor microcomputer (224) is configured to transmit the calculated home appliance power consumption to the main microcomputer, and
wherein the main microcomputer is configured to control the display to display the received home appliance power consumption.

FIG. 1

FIG. 2

FIG. 3

FIG. 4

FIG. 5

220

INPUT UNIT

310

MACHINE ROOM | 117 | MACHINE | 115
FAN DRIVER | | ROOM FAN |

FREEZING | 145 | FREEZING | 144
COMPARTMENT | | COMPARTMENT |
FAN DRIVER | | FAN |

320

TEMPERATURE
SENSOR UNIT

COMPRESSOR | 113 | COMPRESSOR | 112
DRIVER | | |

MAIN
MICROCOMPUTER

240

HEATER DRIVER | 332 | HEATER | 330

MEMORY

ICE MAKING | 216 | ICEMAKER | 190
DRIVER | | |

ICE BANK | 175 | ICE BANK | 195
VIBRATOR | | |

DISPLAY

230

FIG. 6

FIG. 7

FIG. 8

FIG. 9

FIG. 10

FIG. 11

200b

200c

(a)

(b)

FIG. 12

200

MEMORY 241

DISPLAY 231

MAIN
MICROCOMPUTER 211

INPUT UNIT 221

DRIVER
MOTOR
MICROCOMPUTER 224
223

MOTOR 226

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140001442